# EUROPEAN PATENT SPECIFICATION

(11) **EP 2 774 888 B1**
(45) Date of publication and mention of the grant of the patent: **01.02.2017**
(21) Application number: 14157937.5
(22) Date of filing: 05.03.2014
(51) Int. Cl.: B66C 13/18

(54) **display system for a crane**
Krananzeigesystem
Système d'affichage pour une grue

(30) Priority: 06.03.2013 JP 2013044246
(43) Date of publication of application: 10.09.2014
(73) Proprietor: Tadano Ltd., Takamatsu-shi, Kagawa 761-0185 (JP)
(72) Inventor: Miyoshi, Masato, Kagawa 761-0185 (JP)
(74) Representative: Louis Pöhlau Lohrentz

(56) References cited:
- CN-U- 202 653 954
- CN-Y- 201 390 602
- JP-A- H0 326 697
- JP-A- 2007 331 884
- JP-U- H0 530 083

## Description

### BACKGROUND

### Field of the Invention

The present invention relates to a display system provided to show information regarding an operating condition of an operating machine such as a crane.

Conventionally, a display system which shows an operating condition of an operating machine is disposed in an overload-protecting device provided in an operating machine such as a crane. Such a display system includes a flexible display (graphic display) (for example, refer to JP2008-265934A).

JP2007331884 discloses a display system for a crane according to the preamble of claim 1.

A large amount of information is shown on a screen or an image on the screen which is displayed on the graphic display. The information includes a condition of an operating machine, an operation mode selection, maintenance information, and the like. However, the capacity for the information to be shown on the display at the same time is limited. Thus, in the conventional display system, multiple screens are included and changed by the operation of an operator.

However, the conventional display system is inconvenient in that it is difficult to see the same screen between an operator and a customer service person located at a different place from the operator when they talk about the display operation of the screens by phone. Such a situation requires a large amount of time. Therefore, a display system in which smooth communication between an operator and a remotely-located person can be established is required.

### SUMMARY

It is, therefore, an object of the present invention to provide a machine display system in which smooth communication regarding a display operation is achieved between an operator and a remotely-located person.

In order to achieve the above object, the present invention provides a display system for a crane according to claim 1.

### BRIEF DESCRIPTION OF THE DRAWINGS

The accompanying drawings are included to provide further understanding of the invention, and are incorporated in and constitute a part of this specification. The drawings illustrate embodiments of the invention and, together with the specification, serve to explain the principle of the invention.
FIG. provides a block chart of a machine display system in an embodiment according to the present invention.
FIG. 2 provides a view illustrating a basic screen of the display system in the embodiment according to the present invention.
FIG. 3 provides a view illustrating an outrigger condition-registration screen of the display system in the embodiment according to the present invention.
FIG. 4 provides a view illustrating a counterweight condition-registration screen of the display system in the embodiment according to the present invention.
FIG. 5 provides a view illustrating a maintenance and adjustment main-menu screen of the display system in the embodiment according to the present invention.
FIG. 6 provides a view illustrating an adjustment-menu screen of the display system in the embodiment according to the present invention.
FIG. 7 provides a view illustrating a user setting-menu screen of the display system in the embodiment according to the present invention.

### DETAILED DESCRIPTION OF THE PREFERRED EMBODIMENT

Hereinafter, an embodiment of the present invention will be described with reference to the drawings.

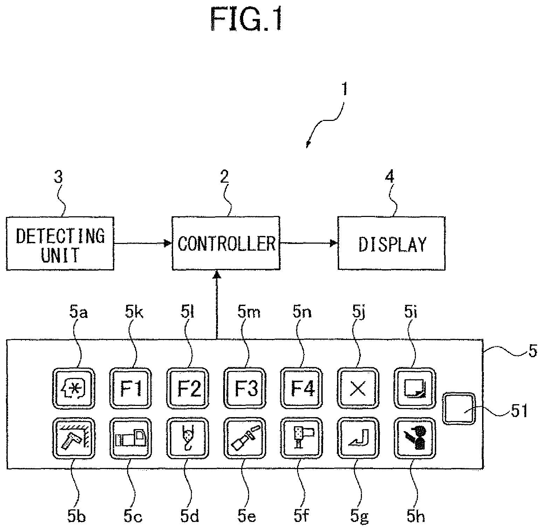

FIG. 1 illustrates a block chart of a display system 1 of a crane according to an embodiment of the present invention. The display system 1 is included in an overload-protecting device and shows an operating condition of the crane to an operator. Hereinafter, a general configuration of the display system 1 will be described at first.

The display system 1 includes a controller 2, a detecting unit 3 (information-obtaining device) which is connected to an input side of the controller 2, an operation unit 5, and a display 4 which is connected to an output side of the controller 2.

The detecting unit 3 obtains information regarding the operating condition of the crane through various switches, sensors, and so on. As information detected in detail, a boom angle, a boom length, a rotational angle, a gib angle, a gib length, a cylinder pressure at a rod side, a cylinder pressure at a tube side, and an outrigger length are included therein.

The controller 2 processes (reprocesses) information regarding the operating condition of the crane obtained by the detecting unit 3, and forms a screen for the operator. The controller 2 forms a plurality of screens including images of icons and so on. Then, the controller 2 adds a particular mark at least on the screen or on the image in the screen.

The display 4 shows the screen which is formed through the controller 2 to the operator. The display 4 is disposed in a not-shown operator's cabin in the crane. The display 4 achieves a flexible display (graphic display). The screen or the image with the particular mark added by the controller 2 is shown on the display 4.

The operation unit 5 performs a display operation of the screen on the display 4 through the controller 2. The operation unit 5 includes various operation switches 5a to 5n, and 51 to input an operation signal to the controller 2. The operation switches 5a to 5n are similar to the conventional switches. The operation switch 51 is a switching device according to the present invention, and is used in the operation of showing or hiding the particular mark. In this case, the screen appears on the display 4 through the controller 2 when the operation unit 5 is operated by the operator.

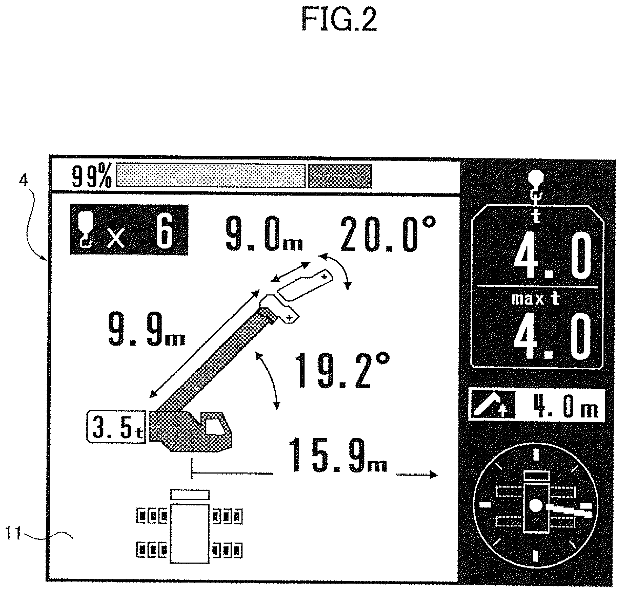

Next, an example of the screen which is shown on the display 4 will be described with reference to FIGS. 2 to 7.

A screen 11 shown in FIG. 2 represents a basic screen 11 which illustrates a general operating condition of the crane. The basic screen 11 is shown when a power source of the display system 1 is turned on.

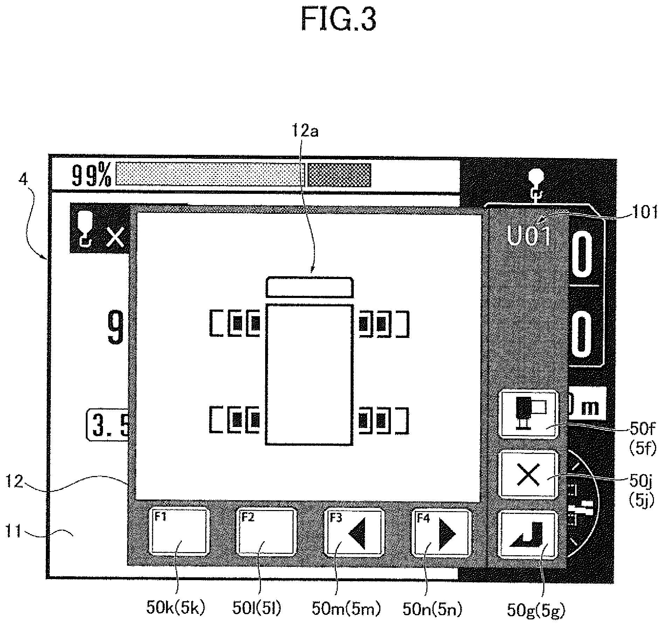

A screen 12 shown in FIG. 3 represents an outrigger-condition registration screen 12. The outrigger-condition registration screen 12 is used while the operator registers the outrigger condition. The outrigger-condition registration screen 12 appears on the basic screen 11 when the operator presses the operation switch 5f (refer to FIG. 1).

As the display image, an icon 12a which schematically shows the plane image of the crane including the outrigger, and icons of operation switches 50f, 50g, 50j, and 50k to 50n which are used in the display operation are shown on the outrigger-condition registration screen 12. Each of the icons 50f, 50g, 50j, and 50k to 50n corresponds to each of the operation switches 5f, 5g, 5j, and 5k to 5n shown in FIG. 1 (indicated with brackets). The outrigger condition can be registered by the operator operating (tapping) each icon 50f, 50g, 50j, and 50k to 50n.

In addition, "U01" of the particular mark 101 is added on the upper right corner of the outrigger-condition registration screen 12.

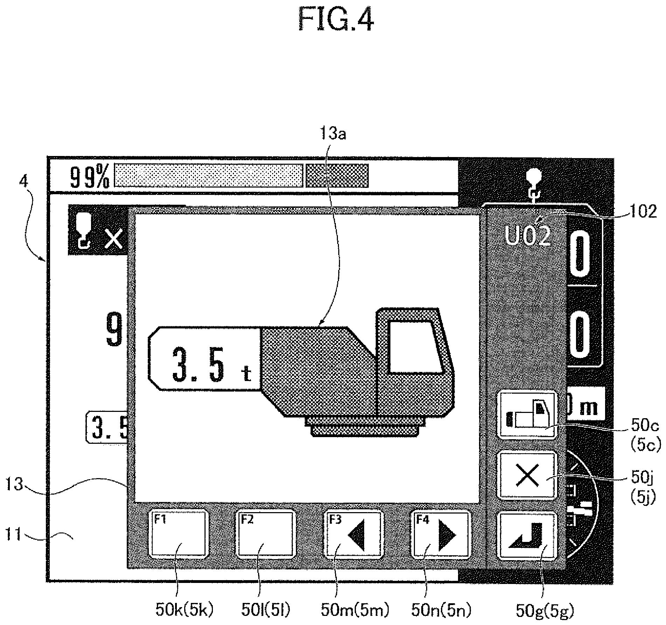

A screen 13 shown in FIG. 4 is a counterweight-condition registration screen 13. The counterweight-condition registration screen 13 is used to register the counterweight condition by the operator. The counterweight-condition registration screen 13 appears on the basic screen 11 when the operator presses the switch 5c (refer to FIG. 1).

As the display image, an icon 13a which schematically shows a side view of the crane including the counterweight, and icons of operation switches 50c, 50g, 50j, and 50k to 50n are displayed on the counterweight-condition registration screen 13. Each of the icons 50c, 50g, 50j, and 50k to 50n corresponds to each of the operation switches 5c, 5g, 5j, and 5k to 5n shown in FIG. 1 (indicated with brackets).

In addition, "U02" of the particular mark 102 is added on the upper right corner of the counterweight-condition registration screen 13.

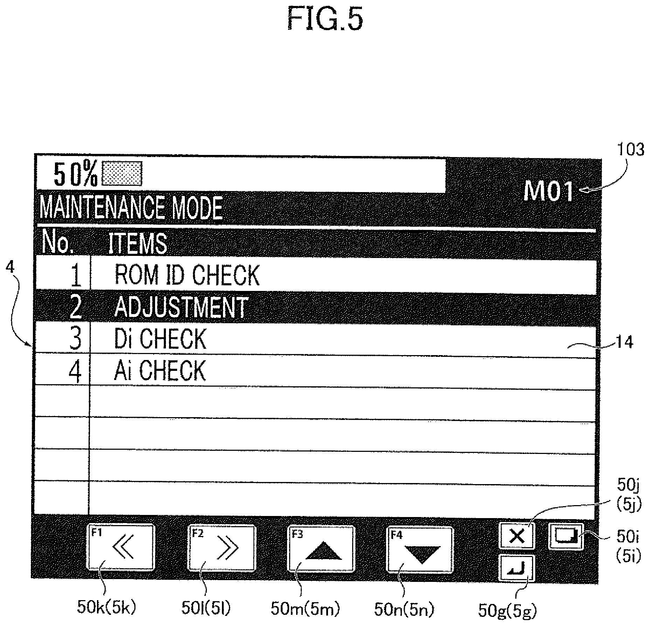

A screen 14 in FIG. 5 represents a maintenance and adjustment main-menu screen 14. The maintenance and adjustment main-menu screen 14 is used in selecting a maintenance item when the operator or the customer service person performs the maintenance of the crane.

When the operator or the customer service person presses and holds one of the operation switches 5m, 5n, and 5g (refer to FIG. 1), the screen shown at that moment is changed to the maintenance and adjustment main-menu screen 14.

As the display images, icons 50g, 50i, 50j, and 50k to 50n of the operation switches which are used in the display operation are provided on the maintenance and adjustment main-menu screen 14. Each of the icons 50g, 50i, 50j, and 50k to 50n corresponds to each of the operation switches 5g, 5i, 5j, and 5k to 5n shown in FIG. 1 (indicated with brackets).

In addition, "M01" of the particular mark 103 is added on the upper right corner of the maintenance and adjustment main-menu screen 14.

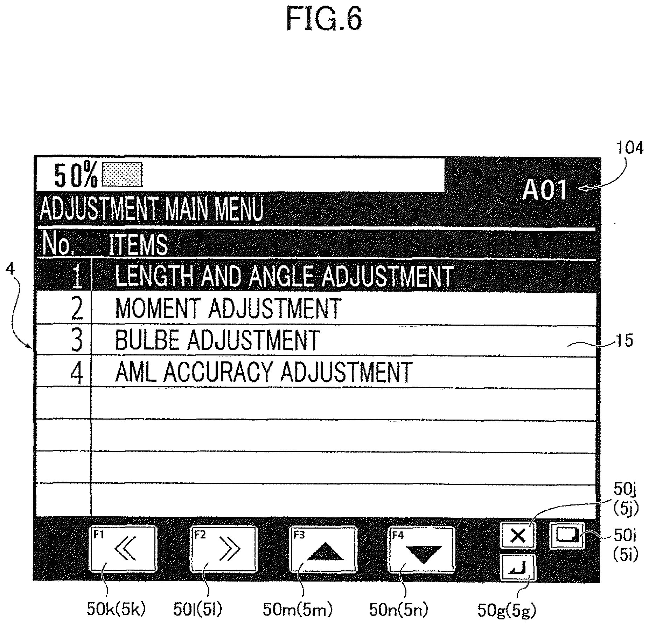

A screen 15 shown in FIG. 6 represents an adjustment-menu screen 15. The adjustment-menu screen 15 is used in selecting an adjustment item when the operator or the customer service person performs the maintenance of the crane.

The maintenance and adjustment main-menu screen 14 is changed to the adjustment-menu screen 15 when the operator or the customer service person selects "No. 2 Adjustment" in the maintenance and adjustment main-menu screen 14 by operating the switches 5m and 5n and press the switch 5g so as to move a cursor up and down, so that the adjustment main-menu screen 14 is shown.

As the display image, the icons of the operation switches 50g, 50i, 50j, and 50k to 50n which are used in the display operation are shown in the adjustment-menu screen 15. Each of the icons 50g, 50i, 50j, and 50k to 50n corresponds to each of the operation switches 5g, 5i, 5j, and 5k to 5n shown in FIG. 1 (indicated with brackets).

In addition, "A01" of the particular mark 104 is added on the upper right corner of the adjustment-menu screen 15.

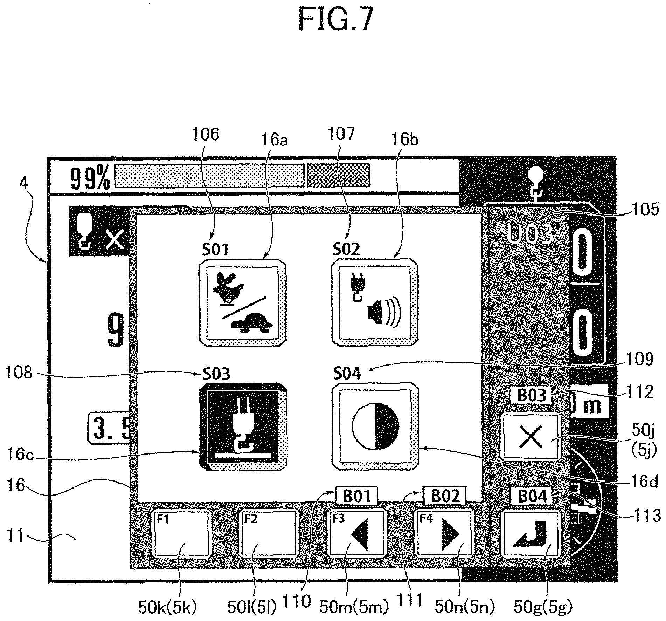

A screen 16 shown in FIG. 7 represents a user-setting menu screen 16. The user-setting menu screen 16 is used in selecting a setting item when the operator sets the user support function and so on.

The user-setting screen 16 appears on the basic screen 11 when the operator presses the operation switch 5a (refer to FIG. 1). As the display image, four icons 16a to 16d which indicate the setting items, and icons of the operation switches 50g, 50j, and 50k to 50n which are used in display operation are shown in the user-setting screen 16. Each of the icons 50g, 50j, and 50k to 50n corresponds to each of the operation switches 5g, 5j, and 5k to 5n shown in FIG. 1 (indicated with brackets).

When the operator operates the operation switches 5m and 5n, selects one of the four icons 16a to 16d, and presses the operation switch 5g, a not-shown adjustment screen according to the selected icon is shown.

In addition, "U03" of the particular mark 105 is added on the upper right corner of the user-setting menu screen 16. "S01 to S04" of the particular marks 106 to 109 are added on each of the four icons 16a to 16d. "B01 to B04" of the particular marks 110 to 113 are added on each of the icons of operation switches 50g, 50j, 50m, and 50n.

As described above, in the display system 1 of the crane according to the embodiment of the present invention, the particular mark is added on at least one of the screen and image which are shown on the display 4 through the controller 2. Thereby, the operator and the remotely-located person such as a customer service person can identify the screen or image easily from the particular mark.

Accordingly, when the operator communicates with the remotely-located person such as the customer service person regarding the screens, for example, they can talk such that "The U01 screen is displayed now", or "Please select S03 icon in the U03 screen by the B01 switch". Thus, it is made possible to match the screen or image to be raised during the conversation easily. Accordingly, the operator and the remotely-located person can communicate smoothly regarding the screen through the display system of the crane according to the embodiment of the present invention. Consequently, an error caused by a wrong adjustment can also be prevented.

In addition, the display system 1 according to the present embodiment includes the operation switch 51 for use in the operation which switches the particular mark between showing and hiding. When the operator presses the operation switch 51 in the case in which the particular mark is shown, the particular mark is hidden through the controller 2 so that the particular mark is not shown on the display 4. Similarly, when the operator presses the operation switch 51 in the case in which the particular mark is not shown, the particular mark is added through the controller 2 so as to be shown on the display 4.

As an example, when the operator presses the operation switch 51 in FIG. 7, the particular marks 105 to 113 are hidden and not shown. When the operator presses the operation switch 51 when the particular marks 105 to 113 are not shown, the particular marks 105 to 113 are added to and shown on the display 4.

According to the above description, when the operator does not require any communication with the remotely-located person regarding the screen, it is possible to hide the particular marks 106 to 113 by pressing the operation switch 51. Therefore, in the display system 1 of the crane according to the present embodiment, it is made possible to prevent the degradation of the operation capacity owing to the particular mark during the general display operation.

Although the embodiments of the present invention have been described above, the present invention is not limited thereto. It should be appreciated that variations may be made in the embodiments described by persons skilled in the art without departing from the scope of the present invention.

For example, the particular marks 101 to 113 are indicated with the combination of letters and numerals, but they are not limited to those. The figures of the particular marks are not limited specifically as long as they can be used to identify the screens or images.

In addition, when the screen and the image appear in a pamphlet such as an operation manual and a service manual, an incorrect operation can be prevented by referring to such documents if similar marks which are used in the actual screens and images are used therein.

In the display system 1 of the crane according to the present embodiment, the particular marks are added to the icons of the operation switches 50g, 50j, and 50k to 50n shown in the user-setting menu screen 16, but they can be added to the icons of the operation switches shown on another screen (for example, the outrigger-condition registration screen 12, or the counterweight-condition registration screen 13).

In the display system 1 of the crane according to the present embodiment, the detecting unit 3 is used as an information-obtaining device according to the present invention, but it is not limited to the above. For example, a camera can be used as the information-obtaining device so that the operating condition of the crane is shown on the display 4 according to the image photographed by the camera.

The operation unit 5 is included in the display system 1 according to the present embodiment, but it is not necessary to be included if the display switch operation of the particular marks or the display operation is not necessary.

Similarly, the operation switch is not necessarily included when the display switch operation of the particular marks is set in the user setting screen 16.

In the display system 1 according to the present embodiment, a plurality of screens is included, but a single screen can be included.

The display system 1 according to the present embodiment is configured such that all of the particular marks on the screen are hidden, but it can be configured such that some of the particular marks on the screen are hidden.

For example, a selection mode can be included. In the selection mode, the operation of display/non-display of the particular marks is selected respectively. In this regard, a switch to change the system to the selection mode is included in the operation unit 5. When the screen is changed to the selection mode through the switch, the controller 2 allocates the operation switches 5a to 5n of the operation unit 5 to the selection switches of each of the particular marks, except the operation switch 51. The operator selects one of the particular marks through the selection switch. Thus, each of the particular marks is shown and hidden by the operation to the operation switch 51.

In the display system 1 according to the present embodiment, the switching operation of the particular marks is performed by hand through the operation switch 51, but it can be operated automatically by the controller 2. In this regard, the controller 2 configures a switching device according to the present invention.

An example in which the switching operation is performed automatically will be described as follows. At first (basic condition), the particular marks are not shown on the screen of the display 4 through the controller 2. When the screen is not operated for a certain amount of time (for example, ten to twenty seconds or more), it is assumed that the operator is having difficulty with the operation, and the particular marks are shown on the screen automatically.

In addition, in the display system 1 according to the present embodiment, the controller 2 forms the screen according to the information of the operating condition of the crane detected through the detecting unit 3. However, the controller 2 can output the information of the operating condition of the crane to the display 4 so that the display 4 can form the screen.

In the machine display system according to the embodiment of the present invention, the operator and the remotely-located person such as the customer service person can identify the screen and image easily owing to the particular marks because the particular mark is added at least on the screen or the image. Accordingly, in communication between the operator and the remotely-located person regarding the display screen, the screen or image raised in the communication can be matched between them easily. Thus, the operator and the remotely-located person can talk about the screen without difficulties in the machine display system according to the embodiment of the present invention.

In addition, in the machine display system according to the embodiment of the present invention, the switching device is disposed so that the particular marks can be shown or hidden. Accordingly, the operator can hide the particular mark when the communication with the remotely-located person is not required, that is, an ordinary display operation is performed. Therefore, degradation of the operation capacity due to the particular mark can be lowered in the display system according to the embodiment of the present invention.

## Claims

1. A display system (1) for a crane, comprising:
an information-obtaining device (3) which obtains information regarding a condition of the crane; and
a controller (2) which displays a screen on a display (4) by using the information regarding the condition of the crane obtained by the information-obtaining device (3),
**characterized in that,**
when the screen is not operated for a certain amount of time, the controller (2) adds a mark (101 - 105, 110 - 113) for identifying a screen and/or an image on the screen to at least one of the screen and the image on the screen, and the display (4) shows the screen and/or the image with the mark (101 - 105, 110 - 113).

2. The display system (1) for a crane according to Claim 1,
further comprising:
a switching device (51) in which a switching operation of display and non-display of the mark (101 - 105, 110 - 113) is performed automatically or by hand so that the mark (101 - 105, 110 - 113) is shown or hidden on the display (4),
wherein
the controller (2) adds or hides the mark according to the switching operation of the switching device, and the display (4) performs the display or the non-display of the mark.

3. The display system (1) for a crane according to Claim 1,
wherein the certain amount of time is ten to twenty seconds or more.

## Patentansprüche

1. Ein Anzeigesystem (1) für einen Kran, welches folgendes umfasst:
ein Gerät (3) zur Informationsgewinnung, welches Informationen in Bezug auf einen Zustand des Krans gewinnt, und
eine Steuerung (2), die eine Anzeige auf einem Bildschirm (4) darstellt, indem sie die Informationen bezüglich des Zustandes des Krans nutzt, die von dem Gerät (3) zur Informationsgewinnung gewonnen werden,
**dadurch gekennzeichnet, dass** die Steuerung (2), wenn die Anzeige während einer bestimmten Zeitspanne nicht läuft, eine Markierung (101-105, 110-113) zum Identifizieren einer Anzeige und / oder eines Bildes auf der Anzeige auf zumindest entweder der Anzeige oder dem Bild auf der Anzeige hinzufügt, und dass der Bildschirm (4) die Anzeige und / oder das Bild auf der Anzeige mit der Markierung (101-105, 110-113) anzeigt.

2. Das Anzeigesystem (1) für einen Kran nach Anspruch 1, welches des weiteren folgendes umfasst:
ein Schaltgerät (51), in welchem automatisch oder per Hand ein Umschaltvorgang zum Anzeigen oder Nicht-Anzeigen der Markierung (101-105, 110-113) durchgeführt wird, so dass die Markierung (101-105, 110-113) auf dem Bildschirm (4) gezeigt wird oder verborgen ist,
worin die Steuerung (2) die Markierung entsprechend dem Schaltvorgang des Schaltgeräts hinzufügt oder verbirgt und worin der Bildschirm (4) das Anzeigen oder Nicht-Anzeigen der Markierung durchführt.

3. Das Anzeigesystem (1) für einen Kran nach Anspruch 1, worin die bestimmte Zeitspanne zehn bis zwanzig Sekunden oder mehr beträgt.

## Revendications

1. Système d'affichage (1) pour une grue, comprenant :
un dispositif d'obtention d'informations (3) qui obtient des informations concernant un état de la grue ; et
un contrôleur (2) qui affiche un écran sur un affichage (4) en utilisant les informations concernant l'état de la grue obtenues par le dispositif d'obtention d'informations (3),
**caractérisé en ce que**,
lorsque l'écran n'est pas utilisé pendant un certain laps de temps, le contrôleur (2) ajoute un repère (101 - 105, 110 - 113) pour identifier un écran et/ou une image sur l'écran à au moins l'un de l'écran et de l'image sur l'écran, et l'affichage (4) montre l'écran et/ou l'image avec le repère (101 -105, 110 - 113).

2. Système d'affichage (1) pour une grue selon la revendication 1, comprenant en outre :
un dispositif de commutation (51) dans lequel une opération de commutation d'affichage et de non-affichage du repère (101 - 105, 110 - 113) est réalisée automatiquement ou manuellement de telle sorte que le repère (101 - 105, 110 - 113) est affiché ou masqué sur l'affichage (4),
dans lequel le contrôleur (2) ajoute ou masque le repère selon l'opération de commutation du dispositif de commutation, et l'affichage (4) procède à l'affichage ou au non-affichage du repère.

3. Système d'affichage (1) pour une grue selon la revendication 1,
dans lequel le certain laps de temps est de dix à vingt secondes ou plus.
